# EUROPÄISCHE PATENTSCHRIFT

(11) **EP 1 959 131 B1**
(45) Veröffentlichungstag und Bekanntmachung des Hinweises auf die Patenterteilung: **11.07.2012**
(21) Anmeldenummer: 07020758.4
(22) Anmeldetag: 24.10.2007
(51) Int. Cl.: F03D 7/02, F03D 9/02, F03D 11/00, F03D 7/04

(54) **Windenergieanlage mit einer hydraulisch betätigeten Rotorbremse**
Wind turbine with a hydraulically actuated rotor brake
Eolienne dotée d'un frein de rotor actionné hydrauliquement

(30) Priorität: 10.01.2007 DE 102007002137
(43) Veröffentlichungstag der Anmeldung: 20.08.2008
(73) Patentinhaber: Nordex Energy GmbH, 22848 Norderstedt (DE)
(72) Erfinder: Wedekind, Christian, 22455 Hamburg (DE)
(74) Vertreter: Schildberg, Peter

(56) Entgegenhaltungen:
- WO-A1-03/080414
- DE-A1-102004 057 522
- JP-A- 2002 048 051
- JP-A- 2006 105 173

## Beschreibung

Die vorliegende Erfindung betrifft eine Windenergieanlage mit einer hydraulisch betätigten Rotorbremse.

Allgemein verfügen Windenergieanlagen über eine Rotorbremse im Triebstrang. Die Rotorbremse ist meist hinter dem Getriebe angeordnet und dient bei Windenergieanlagen mit einer aktiven Blattwinkelverstellung als zusätzliches Bremssystem, über das der Rotor bei Stillstand der Windenergieanlage in seiner Position gehalten wird.

Erich Hau erläutert in Windkraftanlagen, 3. Auflage, Springer-Verlag Berlin, Kapitel 8.7, daß für Wartungs- und Reparaturarbeiten das Festbremsen des Rotors unerläßlich und im allgemeinen auch während der normalen Stillstandszeiten üblich sei. Zu der Funktion der Rotorbremse in der Betriebsführung wird ferner erläutert, daß diese im einfachsten Fall auf die reine Haltefunktion beim Rotorstillstand begrenzt sei. Die Bremse müsse in diesem Fall auf das erforderliche Haltemoment des Rotors im Stillstand ausgelegt sein. Über die Funktion als reine Haltebremse hinaus könne die Rotorbremse grundsätzlich auch als Betriebsbremse ausgelegt werden, sofern das Bremsmoment und die Bremsleistung (thermische Beanspruchung) ausreichend seien.

Bei Windenergieanlagen, bei denen die Rotorbremse einen Teil des Sicherheitssystems bildet, ist das Bremssystem als passive Bremse oder als sogenannte Fail-Safe-Bremse ausgelegt. Dies bedeutet, daß die Bremse mit Druck beaufschlagt werden muß, um das anliegende Bremsmoment zu reduzieren oder die Bremse vollständig freizugeben. Erzielt wird das Bremsmoment der passiven Bremse über ein Federpaket, das die zugehörigen Bremsbacken in die Bremsposition vorspannt. Das dabei aufgebrachte Bremsmoment wird durch die von den Federelementen ausgeübte Federkraft erzeugt. Es ist daher notwendig, für eine Windenergieanlage, die ein starkes Bremsmoment erfordert, entsprechend große Federpakete in der Bremse vorzusehen. Die vorstehend beschriebene passive Rotorbremse wird gelöst, indem beispielsweise eine Hydraulikflüssigkeit in den Bremszylinder eingeleitet wird. Die Hydraulikflüssigkeit wird derart in den Bremszylinder eingeleitet, daß ihr Druck gegen die Kraft des Federpakets wirkt.

Im Gegensatz zu den vorstehend beschriebenen passiven Bremsen sind auch aktive Bremsen für Windenergieanlagen bekannt, bei denen das Bremsmoment nicht über ein Federelement aufgebracht wird, sondern mit steigendem Hydraulikdruck auch das Bremsmoment zunimmt. Der Vorteil einer aktiven Bremse liegt darin, daß diese kleiner baut und deutlich kostengünstiger ist. Auch ist mit einer aktiven Bremse ein deutlich größeres Bremsmoment möglich.

Bei der Verwendung einer aktiven Bremse als Betriebsbremse, also zum Abbremsen des sich drehenden Triebstrangs, können aufgrund von Toleranzen im Planlauf und bei der Dicke der Bremsscheibe hohe Druckschwankungen auftreten. Große Druckschwankungen treten insbesondere dann auf, wenn mit Hilfe eines Druckminderventils Hydraulikflüssigkeit in dem Bremszylinder und in dessen Zuleitung eingespannt ist. Die Verwendung eines Druckminderventils in der Hydraulik ist insbesondere für aktive Bremsen notwendig, sofern diese als Betriebs- und Haltebremse verwendet werden soll.

Aus DE 10 2004 057 522 A1 ist eine Bremseinrichtung für eine Windenergieanlage bekannt, bei der eine Bremsventilanordnung ein 3/2-Wegesitzventil aufweist, über das der Druckraum zum Bremsen mit einer Druckmittelquelle und zum Lüften der Bremse mit einer Druckmittelsenke verbunden ist. Ferner ist bekannt, einen Ausgleichsspeicher und einen Hydrospeicher an der Zuführleitung zu dem Bremszylinder vorzusehen.

Aus Patent Abstracts of Japan JP 2002048051 ist ein hydraulisches Bremssystem bekannt, bei dem bei einem Stromausfall eine Bremse betätigt wird. Die Zuleitung zu der Bremseinrichtung ist mit einem Puffer für das Hydraulikmedium ausgestattet.

Der Erfindung liegt die Aufgabe zugrunde, eine hydraulisch betätigte Vorrichtung bereitzustellen, die mit einfachen Mitteln Druckschwankungen ausgleicht, welche bei der Bremsung mit einem eingespanntem Volumen an Hydraulikflüssigkeit auftreten.

Erfindungsgemäß wird die Aufgabe durch eine Windenergieanlage mit den Merkmalen aus Anspruch 1 gelöst. Vorteilhafte Ausgestaltungen bilden den Gegenstand der Unteransprüche.

Die erfindungsgemäße Windenergieanlage ist mit einer hydraulisch betätigten Rotorbremse für einen Triebstrang ausgestattet. Die Rotorbremse weist mindestens einen hydraulisch betätigten Bremszylinder auf, dessen Bremsmoment mit steigendem Hydraulikdruck zunimmt. Bei der Rotorbremse handelt es sich um eine aktive Rotorbremse. Erfindungsgemäß ist ein Hydrospeicher mit Hydraulikflüssigkeit vorgesehen, der mit einer Druckleitung verbunden ist, über die ein Bremsdruck der Hydraulikflüssigkeit beim Abbremsen des Triebstrangs an dem Bremszylinder anliegt. Der erfindungsgemäße Speicher ist vorgesehen, um während des Bremsvorgangs, bei dem der Bremsdruck an dem Bremszylinder anliegt, Druckschwankungen in der Druckleitung auszugleichen.

Allgemein wird bei einer hydraulisch betätigten Rotorbremse zwischen Bremsdruck und Haltedruck der Hydraulikflüssigkeit unterschieden. Dabei ist der Bremsdruck kleiner als der am Bremszylinder anliegende Druck während des Haltevorgangs (Haltedruck). Die Erfindung sieht vor, den Speicher ausschließ lich während des Bremsvorgangs einzusetzen. Dies bedeutet, daß der Speicher lediglich mit einem deutlich niedrigeren Vorfülldruck versehen ist als ein Speicher, der ebenfalls zum Ertragen des Haltedrucks dimensioniert ist. Somit kann bei der erfindungsgemäßen Windenergieanlage eine kleinere Speichergröße verwendet werden.

Erfindungsgemäß ist ein erstes Druckminderventil vorgesehen, das einen anliegenden Systemdruck auf den Bremsdruck reduziert. Bevorzugt ist der erfindungsgemäße Speicher an eine Druckleitung angeschlossen, die den Ausgang des ersten Druckminderventils mit dem Bremszylinder verbindet. Der in dem Speicher vorgesehene Druck der Hydraulikflüssigkeit entspricht dem Bremsdruck der Hydraulikflüssigkeit, so daß Schwankungen in dem Bremsdruck kompensiert werden können.

Die Hydraulik besitzt zusätzlich ein zweites Druckminderventil, das den Systemdruck der Hydraulikflüssigkeit auf den Haltedruck der Hydraulikflüssigkeit reduziert. Der Haltedruck der Hydraulikflüssigkeit entspricht dem Druck, der erforderlich ist, um mindestens das notwendige Haltemoment an dem Bremszylinder zu erzeugen. Aufgrund des geringeren Reibwertes der Paarung Bremsbeläge und Bremsscheibe im kalten Zustand ist der Haltedruck bei Stillstand des Triebstrangs höher als der Bremsdruck.

In einer bevorzugten Ausgestaltung sind die von den Druckminderventilen abgehenden Druckleitungen über ein Umschaltventil wahlweise mit einer Druckleitung zu dem Bremszylinder verbindbar. Zweckmäßigerweise ist eine Umschalteinheit vorgesehen, die das Umschaltventil ansteuert, um das erste oder zweite Druckminderventil mit dem Bremszylinder zu verbinden. Die Umschalteinheit legt fest, wann der Druck des ersten Druckminderventils und wann der Druck des zweiten Druckminderventils auf den Bremszylinder gegeben wird.

Bevorzugt steuert die Umschalteinheit das Umschaltventil hydraulisch. Es ist aber ebenfalls möglich, daß die Umschalteinheit das Umschaltventil elektrisch steuert.

Zweckmäßigerweise ist die Druckleitung zu dem Bremszylinder über ein 2/2-Wegeventil mit einem Tank verbunden. Durch das Öffnen des 2/2-Wegeventils kann der Druck aus dem Bremszylinder abgelassen werden und der Bremszylinder öffnet. Für die Druckleitungen der Rotorbremse ist ein Drucksystem vorgesehen, das ausfallsicher Hydraulikflüssigkeit in ausreichender Menge zur Verfügung stellt.

Die Erfindung wird nachfolgend anhand einer Zeichnung näher erläutert.

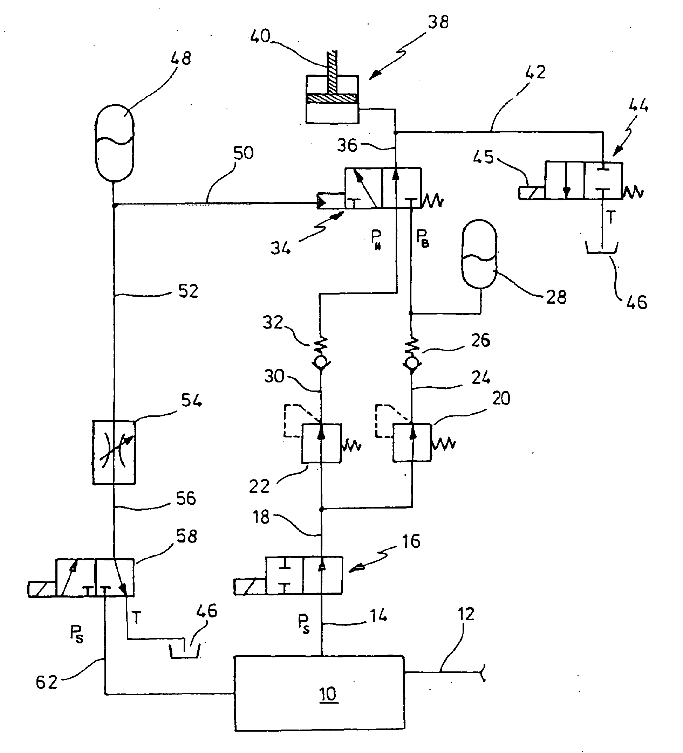

Die einzige Figur zeigt eine schematische Ansicht eines Hydrauliksystems zur Ansteuerung einer Rotorbremse.

Ein Drucksystem 10 stellt eine Hydraulikflüssigkeit bei einem Systemdruck pₛ zur Verfügung. Das Drucksystem 10 kann über weitere Druckleitungen 12 auch andere hydraulische Verbraucher der Windenergieanlage versorgen. Beispielsweise kann ein hydraulisch betätigtes Pitchsystem in der Windenergieanlage vorgesehen sein.

Das Drucksystem speist eine erste Druckleitung 14, in der ein 2/2-Wegeventil angeordnet ist. Das 2/2-Wegeventil 16 ist mechanisch in seine offene Position vorgespannt. Elektrisch kann das 2/2-Wegeventil in eine gesperrte Position gestellt werden, in der ein Druck in der Druckleitung 18 erhalten bleibt.

Die Druckleitung 18 gabelt sich und mündet in ein erstes Druckminderventil 20 und parallel geschaltet dazu in ein zweites Druckminderventil 22. Das erste Druckminderventil 20 reduziert den anliegenden Systemdruck pₛ auf den Bremsdruck p_{B}. Eine Druckleitung 24 ist mit einem Rückschlagventil 26 versehen, das ein Zurücklaufen der Hydraulikflüssigkeit in das Drucksystem 10 verhindert. Die Druckleitung 24 ist mit einem Speicher 28 verbunden, der Hydraulikflüssigkeit enthält. Die Hydraulikflüssigkeit in dem Speicher 28 besitzt dabei den Bremsdruck p_{B}.

Ein zweiter Ast mit dem zweiten Druckminderventil 22 ist parallel geschaltet zu dem vorstehend beschriebenen Ast mit dem ersten Druckminderventil 20. An dem zweiten Druckminderventil 22 liegt ebenfalls der Systemdruck pₛ über die Druckleitung 18 an. Das Druckminderventil 22 reduziert den Druck der Hydraulikflüssigkeit auf den Haltedruck p_{H}, der nötig ist, um bei stillstehendem Triebstrang das notwendige Haltemoment aufzubringen. In der Regel sind Haltedruck und Haltemoment größer als Bremsdruck und Bremsmoment der Rotorbremse.

Die Ausgangsleitung 30 des zweiten Druckminderventils 22 ist ebenfalls mit einem federvorgespannten Rückschlagventil 32 versehen.

Druckleitung 24 und 30 münden in einem ersten hydraulisch vorgesteuerten 3/2-Wegeventil 34. In seiner federvorgespannten Stellung, die mit b bezeichnet ist, schaltet das erste 3/2-Wegeventil den Haltedruck p_{H} der Druckleitung 30 auf eine Druckleitung 36, die zum Bremszylinder 38 führt. In seiner mit a gekennzeichneten Stellung schaltet das erste 3/2-Wegeventil den Bremsdruck p_{B} aus der Druckleitung 24 auf die Druckleitung 36. Die Druckleitung 36 führt zu einem schematisch dargestellten Bremszylinder mit einem Bremskolben 40. Über die eingeführte Hydraulikflüssigkeit wird der Bremskolben 40 betätigt und übt eine entsprechende Kraft auf den Bremsbelag der Bremse aus. Die Druckleitung 36 ist über eine weitere Druckleitung 42 mit einem 2/2-Wegeventil 44 verbunden. Das 2/2-Wegeventil sperrt in seiner federvorgespannten Position die Druckleitung 42. Durch eine elektrische Betätigung 45 kann das 2/2-Wegeventil 44 in seine offene Position umgeschaltet werden und leitet die Hydraulikflüssigkeit in einen Tank 46. Auf diese Weise wird der Bremszylinder 38 entlastet und die Bremse gelöst.

Eine Betätigung des Umschaltventils 34 erfolgt in dem dargestellten Ausführungsbeispiel hydraulisch. Hierzu ist eine hydraulische Umschalteinheit vorgesehen, die einen Speicher 48 für Hydraulikflüssigkeit besitzt. Der Speicher 48 ist über eine Steuerleitung 50 mit dem ersten 3/2-Wegeventil 34 verbunden. Die Druckleitung 52 besitzt ein Stromregelventil 54, das über die Druckleitung 56 mit einem zweiten 3/2-Wegesitzventil 58 verbunden ist. Das zweite 3/2-Wegesitzventil 58 ist in seiner stromlosen Stellung mit einem Tank 60 verbunden, in den die Hydraulikflüssigkeit aus dem Speicher 48 abfließen kann. In seiner zweiten Position verbindet das 3/2-Wegesitzventil die Druckleitung 62 des Drucksystems 10 mit dem Speicher 48, um den gewünschten Druck im Speicher wiederherzustellen. Im Betrieb der dargestellten Umschalteinheit reduziert sich der Druck im Speicher 48 mit dem Ablaufen der Hydraulikflüssigkeit aus dem Tank 60. Sobald ein vorbestimmter Druckwert unterschritten wird, schaltet das Umschaltventil zwischen Haltedruck und Bremsdruck um.

Im Betrieb befindet sich zu Beginn der Bremsung das als Umschaltventil dienende erste 3/2-Wegeventil 34 in der Stellung a. Der Systemdruck wird über das Druckminderventil 20 auf den gewünschten Bremsdruck abgesenkt und der Bremszylinder wird geschlossen. Mit Hilfe des Dämpfungsspeichers 28 wird das vorhandene Volumen in der Rotorbremse, hervorgerufen durch Maßtoleranzen der Bremsscheibe, abgepuffert, der Bremsdruck bleibt hierbei konstant. Der Dämpfungsspeicher ist als ein an sich bekannter Hydrospeicher ausgeführt, in dem zur Erzeugung des Drucks ein kompressibles Medium vorgesehen ist. Nachdem der Triebstrang zum Stillstand gekommen ist, wird das erste 3/2-Wegeventil 34 geschaltet und der hohe Haltedruck liegt an. Der Dämpfungsspeicher 24 wird damit aus dem Drucksystem genommen, so daß dieser nicht mit dem Haltedruck beaufschlagt wird. Die Umschaltung zwischen Bremsdruck und Haltedruck erfolgt zeitabhängig. In dem dargestellten Ausführungsbeispiel ist die Zeitdauer bis zum Umschalten davon abhängig, wie lange es dauert, bis die Hydraulikflüssigkeit aus dem Speicher 48 unter einen vorbestimmten Druckwert gefallen ist. Alternativ ist es auch möglich, ein elektrisches Zeitglied für das Umschalten vorzusehen.

## Patentansprüche

1. Windenergieanlage mit einer hydraulisch betätigten Rotorbremse für einen Triebstrang, die mindestens einen hydraulisch betätigten Bremszylinder (38) aufweist, dessen Bremsmoment mit steigendem Hydraulikdruck zunimmt, wobei bei Betätigung der Bremse ein Volumen an Hydraulikflüssigkeit durch ein erstes Druckminderventil (20) im Bremszylinder (38) und in dessen Druckleitung (24, 36) eingespannt ist, wobei
ein Speicher (28) mit Hydraulikflüssigkeit vorgesehen ist, der mit der Druckleitung (24, 36) verbunden ist, und das erste Druckminderventil (20)
einen anliegenden Systemdruck (pₛ) auf den Bremsdruck (p_{B}) reduziert,
**dadurch gekennzeichnet, daß** zusätzlich ein zweites Druckminderventil (22) vorgesehen ist, das den Systemdruck (pₛ) auf den Haltedruck (p_{H}) reduziert.

2. Windenergieanlage nach Anspruch 1, **dadurch gekennzeichnet, daß** die Druckleitung (24) das erste Druckminderventil (20) mit dem Bremszylinder (38) verbindet.

3. Windenergieanlage nach Anspruch 1 oder 2, **dadurch gekennzeichnet, daß** der Hydraulikdruck in dem Speicher (28) dem Bremsdruck (p_{B}) entspricht.

4. Windenergieanlage nach Anspruch 1, **dadurch gekennzeichnet, daß** der Haltedruck (p_{H}) des zweiten Druckminderventils (22) größer als der Bremsdruck (p_{B}) des ersten Druckminderventils (20) ist.

5. Windenergieanlage nach einem der Ansprüche 1 bis 4, **dadurch gekennzeichnet, daß** die von den Druckminderventilen (20, 22) abgehenden Druckleitungen (24, 30) über ein Umschaltventil (34) alternativ mit einer Druckleitung (36) zu dem Bremszylinder (38) verbindbar sind.

6. Windenergieanlage nach Anspruch 5, **dadurch gekennzeichnet, daß** der Speicher (28) in einer Stellung des Umschaltventils von dem Bremszylinder getrennt ist.

7. Windenergieanlage nach Anspruch 5 oder 6, **dadurch gekennzeichnet, daß** eine Umschalteinheit vorgesehen ist, die das Umschaltventil (34) ansteuert, um das erste oder zweite Druckminderventil mit dem Bremszylinder zu verbinden.

8. Windenergieanlage nach Anspruch 7, **dadurch gekennzeichnet, daß** die Umschalteinheit das Umschaltventil (34) hydraulisch oder elektrisch steuert.

9. Windenergieanlage nach einem der Ansprüche 1 bis 8, **dadurch gekennzeichnet, daß** die Druckleitung (36) zu dem Bremszylinder (38) über ein 2/2-Wegeventil (44) mit einem Tank verbunden ist.

10. Windenergieanlage nach einem der Ansprüche 1 bis 9, **dadurch gekennzeichnet, daß** für die Druckleitungen ein Drucksystem (10) vorgesehen ist, das ausfallsicher Hydraulikflüssigkeit zur Verfügung stellt.

## Claims

1. A wind turbine with a hydraulically actuated rotor brake for a drive train, which has at least one hydraulically actuated brake cylinder (38), the braking torque of which grows when the hydraulic pressure increases, wherein a volume of hydraulic fluid is restrained by a first pressure reducing valve (20) in the brake cylinder (38) and in the pressure line (24, 36) thereof when the brake is actuated, wherein an accumulator (28) with hydraulic fluid is provided, which is connected to the pressure line (24, 36) and the first pressure reducing valve (20) reduces an applied system pressure (pₛ) to the brake pressure (p_{B}), **characterized in that** a second pressure reducing valve (22) is additionally provided, which reduces the system pressure (pₛ) to the holding pressure (p_{H}).

2. A wind turbine according to claim 1, **characterized in that** the pressure line (24) connects the first pressure reducing valve (20) with the brake cylinder (38).

3. A wind turbine according to claim 1 or 2, **characterized in that** the hydraulic pressure in the accumulator (28) matches the brake pressure (p_{B}).

4. A wind turbine according to claim 1, **characterized in that** the holding pressure (p_{H}) of the second pressure reducing valve (22) is larger than the brake pressure (p_{B}) of the first pressure reducing valve (20).

5. A wind turbine according to one of the claims 1 to 4, **characterized in that** the pressure lines (24, 30) starting from the pressure reducing valves (20, 22) are alternatively connectable to a pressure line (36) towards the brake cylinder (38) via a switching valve (34).

6. A wind turbine according to claim 5, **characterized in that** the accumulator (28) is separated from the brake cylinder in one position of the switching valve.

7. A wind turbine according to claim 5 or 6, **characterized in that** a switching unit is provided, which actuates the switching valve (34) in order to connect the first or second pressure reducing valve to the brake cylinder.

8. A wind turbine according to claim 7, **characterized in that** the switching unit actuates the switchover valve (34) hydraulically or electrically.

9. A wind turbine according to one of the claims 1 to 8, **characterized in that** the pressure line (36) towards the brake cylinder (38) is connected to a tank via a 2/2-way valve (44).

10. A wind turbine according to one of the claims 1 to 9, **characterized in that** a pressure system (10) is provided for the pressure lines, which provides hydraulic fluid in a fail-safe manner.

## Revendications

1. Éolienne avec un frein de rotor actionné hydrauliquement pour une chaîne cinématique, qui comporte au moins un cylindre de frein (38) actionné hydrauliquement dont le couple de freinage augmente avec l'augmentation de la pression hydraulique, un volume de liquide hydraulique étant, lors de l'actionnement du frein, serré par une premier valve de réduction de pression (20) dans le cylindre de frein (38) et dans sa conduite de pression (24, 36),
un réservoir (28) avec du liquide hydraulique étant prévu, qui est connecté à la conduite de pression (24, 36), et la premier valve de réduction de pression (20) réduisant à la pression de freinage (p_{B}) une pression de système (pₛ) qui est présente,
**caractérisé par**, en plus, une deuxième valve de réduction de pression (22) est prévu qui réduit la pression de système (pₛ) à la pression d'arrêter (p_{H}).

2. Éolienne selon la revendication 1, **caractérisé par** la conduite de pression (24) connecte la premier valve de réduction de pression (20) au cylindre de frein (38).

3. Éolienne selon la revendication 1 ou la revendication 2, **caractérisé par** la pression hydraulique dans le réservoir (28) correspond à la pression de freinage (p_{B}).

4. Éolienne selon la revendication 1, **caractérisé par** la pression d'arrêter (p_{H}) de la deuxième valve de réduction de pression (22) est supérieure à la pression de freinage (p_{B}) de la premier valve de réduction de pression (20).

5. Éolienne selon une des revendications 1 à 4, **caractérisé par** les conduites de pression (24, 30) partant des valves de réduction de pression (20, 22) peuvent être connectées, par le biais d'une valve de commutation (34), de façon alternative à une conduite de pression (36) conduisant au cylindre de frein (38).

6. Éolienne selon la revendication 5, **caractérisé par** le réservoir (28) est, dans une position de la valve de commutation, séparé du cylindre de frein.

7. Éolienne selon la revendication 5 ou la revendication 6, **caractérisé par** il est prévu un matériel de commutation qui commande la valve de commutation (34) afin de connecter la premier ou la deuxième valve de réduction de pression au cylindre de frein.

8. Éolienne selon la revendication 7, **caractérisé par** le matériel de commutation contrôlé la valve de commutation (34) hydrauliquement ou électriquement.

9. Éolienne selon une des revendications 1 à 8, **caractérisé par** la conduite de pression (36) conduisant au cylindre de frein (38) est connectée à un tank par le biais d'un valve 2/2 voies (44).

10. Éolienne selon une des revendications 1 à 9, **caractérisé par**, pour les conduites de pression, il est prévu un système à pression (10) qui met à disposition le liquide hydraulique surement devant une panne.
